# FASCICULE DE BREVET EUROPEEN

(11) **EP 0 843 909 B1**
(45) Date de publication et mention de la délivrance du brevet: **26.05.1999**
(21) Numéro de dépôt: 96924950.7
(22) Date de dépôt: 05.07.1996
(51) Int. Cl.: H01S 3/23, B23K 26/06

(54) **DISPOSITIF DE COMMANDE D'UNE SOURCE LASER A PLUSIEURS MODULES LASER POUR OPTIMISER ENERGETIQUEMENT ET SPATIALEMENT LE TRAITEMENT DE SURFACE PAR LASER**
KONTROLLGERÄT FÜR EINE AUS MEHREREN LASERMODULEN BESTEHENDE LASERQUELLE ZUR ENERGETISCHEN UND RÄUMLICHEN OPTIMIERUNG WÄHREND DER LASERBEARBEITUNG VON OBERFLÄCHEN
DEVICE FOR CONTROLLING A LASER SOURCE WITH MULTIPLE LASER UNITS FOR THE ENERGY AND SPATIAL OPTIMISATION OF A LASER SURFACE TREATMENT

(30) Priorité: 11.08.1995 FR 9509780
(43) Date de publication de la demande: 27.05.1998
(73) Titulaire: Société de Production et de Recherches Appliquées, 92270 Bois-Colombes (FR)
(72) Inventeur: GODARD, Bruno, F-91940 Les Ulis (FR); STEHLE, Marc, F-92190 Meudon (FR)
(74) Mandataire: Nicolle, Olivier
(86) Numéro de dépôt international: FR9601060
(87) Numéro de publication internationale: WO9707578

(56) Documents cités:
- EP-A- 0 308 512
- EP-A- 0 511 805
- WO-A-94/17953
- WO-A-94/26459
- DE-A- 4 009 859
- DE-A- 4 301 689
- US-A- 5 253 110
- US-A- 5 293 389
- NTIS TECH NOTES, no. 8B, Août 1986, SPRINGFIELD, VA US, XP002012655 J.B.LAUDENSLAGER ET AL.: "TIMED MULTIPLE-LASER ARRAY "
- JOURNAL OF APPLIED PHYSICS, vol. 71, no. 1, 1 Janvier 1992, NEW YORK US, pages 85-93, XP000270254 D.XENAKIS ET AL.: "LASER-PLASMA X-RAY GENERATION USING AN INJECTION-MODE-LOCKED XeCl EXCIMER LASER"
- OPTICS LETTERS, vol. 14 , no. 7, Avril 1989, WASHINGTON US, pages 364-366, XP000052032 M.D.DAWSON ET AL.: "WAVELENGTH-TUNABLE SYNCHRONOUS AMPLIFICATION OF PICOSECOND DYE-LASER PULSES NEAR 1um"
- PATENT ABSTRACTS OF JAPAN vol. 14, no. 99 (E-893) [4042] , 22 Février 1990 & JP,A,01 302881 (Y.ARATA), 6 Décembre 1989,

## Description

La présente invention concerne la commande d'une source laser à plusieurs modules laser pour optimiser énergétiquement et spatialement le traitement de surface par laser.

Elle trouve une application générale dans le traitement de surface par laser, tel que le décapage, le nettoyage, le polissage et la préparation d'une surface. Elle trouve plus particulièrement une application dans le recuit par laser excimère de couches de silicium amorphe placées sur un substrat.

D'une façon générale, le recuit de silicium amorphe par laser excimère consiste à élever très rapidement la température de la couche de silicium amorphe jusqu'à la fusion pour obtenir une cristallisation sous forme d'un polysilicium. La fusion de la couche de silicium ne doit pas pour autant perturber de façon trop importante le substrat en verre standard.

En pratique, l'effet de chauffage est dû à l'absorption optique du faisceau laser par une mince couche de silicium amorphe, par exemple sur une épaisseur inférieure à 30nm.

Le recuit de silicium amorphe par laser excimère nécessite une excellente connaissance des caractéristiques structurelles de l'échantillon à traiter, comme décrit au moins en partie dans la Demande de brevet intitulée "Dispositif et procédé de contrôle de traitement de surface par laser", déposée en France par le Demandeur, le 11 août 1995, sous le No 95 09778.

En premier lieu, le chauffage par laser doit être efficace car il influence fortement l'évolution thermique de l'échantillon, notamment au niveau de la fusion de la couche de silicium qui doit être totale et au niveau de la fusion du substrat qu'il convient d'éviter.

En second lieu, la vitesse de refroidissement et de solidification de la couche de silicium doit être relativement lente car elle détermine la taille des grains de polysilicium présents dans la couche après recuit, les cristaux de grande taille sont les plus favorables à un fonctionnement optimal, pour certains dispositifs micro-électroniques à base de silicium.

La Demanderesse a observé qu'un tel traitement optimal sur le plan énergétique et spatial, est difficile à obtenir à l'aide d'une seule source laser.

Elle propose donc d'utiliser une source laser comprenant au moins deux modules laser.

Le document DE-A-4009859 divulgue un dispositif de commande d'une source laser selon le préambule de la revendication 1.

Toutefois, la commande d'une source laser à plusieurs modules, en combinaison avec le traitement de surface par laser, est à son tour difficile à mettre en oeuvre.

La présente invention apporte une solution à ce problème.

Elle a pour objet un dispositif de commande d'une source laser comprenant au moins deux modules laser ainsi que des moyens de couplage propres à coupler les faisceaux laser issus de chaque module pour délivrer un faisceau laser résultant destiné au traitement d'une surface.

L'invention est définie par la revendication 1. Divers modes de réalisation sont définis par les revendications dépendantes.

Selon une définition générale de l'invention, il est prévu, en combinaison avec le traitement de surface par laser, d'ajuster les caractéristiques des faisceaux laser issus de chaque module laser pour obtenir un faisceau laser résultant avec un profil temporel de puissance énergétique adapté de façon optimale audit traitement de surface par laser, et des moyens homogénéisateurs propres à homogénéiser spatialement la répartition énergétique dudit faisceau laser résultant, ce qui permet d'adapter en combinaison la répartition spatiale et énergétique dudit faisceau laser résultant au traitement de surface choisi.

On entend par faisceau laser résultant, un faisceau constitué d'une pluralité de faisceaux laser initiaux.

En pratique, dans l'application recuit de silicium amorphe par laser excimère, le profil temporel de la puissance du faisceau laser résultant comprend un front de montée raide pour améliorer l'efficacité du chauffage, un palier sensiblement plat correspondant à une profondeur de traitement, choisie afin d'obtenir une fusion totale de la couche de silicium amorphe à ladite profondeur, tout en évitant la fusion du substrat et un front de descente doux pour favoriser la recristallisation.

D'autres caractéristiques et avantages de l'invention apparaîtront à la lumière de la description détaillée ci-après et des dessins dans lesquels:
- la figure 1 représente schématiquement une source laser comprenant trois modules laser montés en série;
- la figure 2 représente schématiquement une source laser comprenant trois modules laser montés en série avec des miroirs de renvoi et des lentilles de focalisation;
- la figure 3 représente schématiquement une source laser comprenant trois modules laser amplificateurs montés en parallèle;
- la figure 4 représente schématiquement une source laser à deux modules laser oscillateurs montés en parallèle, l'un des oscillateurs étant associé en outre à un module amplificateur;
- la figure 5 représente schématiquement une source laser à deux modules laser oscillateurs montés en parallèle, chaque module oscillateur étant en outre associé à un module amplificateur;
- la figure 6A représente schématiquement les profils temporels de deux faisceaux laser issus chacun d'un module; et
- la figure 6B représente schématiquement la profondeur de fusion en fonction du temps de traitement pour les deux profils temporels de laser de la figure 6A.

La description s'appuie, non limitativement, sur une application particulière de la présente invention qui concerne la fabrication d'écrans à cristaux liquides à matrice active, appelés encore AMLCD pour "Activ Matrix Liquid Cristal Display", et plus précisément l'étape qui consiste à fabriquer des transistors en polysilicium (Polysilicon Thin Film Transistor, TFT), nécessaires aussi bien à la réalisation des circuits de pilotage de l'écran qu'aux éléments d'affichage.

Cette technique consiste à exploiter l'absorption particulièrement forte du silicium dans l'ultra-violet, alors que le verre du substrat est complètement transparent aux mêmes longueurs d'onde. Un faisceau laser pulsé de forte puissance permet d'élever sélectivement la température de la couche de silicium amorphe jusqu'à la fusion, sans affecter le substrat.

Le procédé a l'avantage de pouvoir être très rapide (la durée moyenne d'une impulsion d'un laser excimère à 308 nm est seulement de 150 ns). Pour assurer un traitement homogène de grandes surfaces, il est nécessaire d'utiliser un laser excimère à forte puissance, par exemple un laser excimère à ré-ionisation par rayons X fournissant une puissance effective de 1 kW (c'est-à-dire 10 j x 100 Hz ou 13 j x 80 Hz).

Ce type de laser permet avantageusement d'obtenir un faisceau laser de forte puissance, pulsé avec un taux de répétition relativement faible, ce qui autorise un traitement sur une surface importante, voire jusqu'à l'intégralité de chaque panneau en une seule impulsion laser.

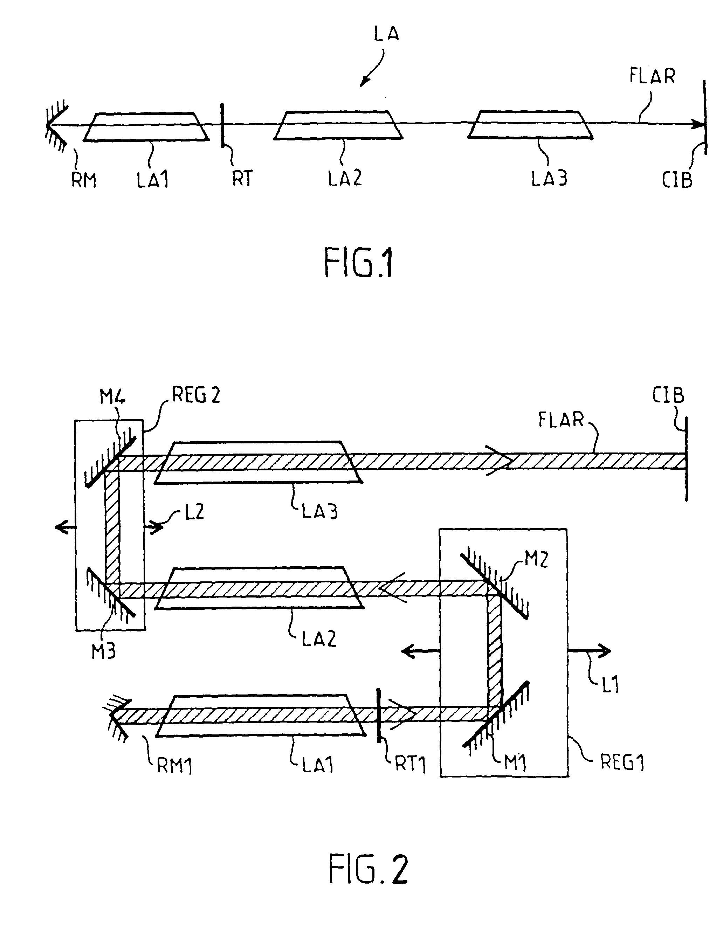

Sur la figure 1, le dispositif mettant en oeuvre le procédé de recuit comprend une source laser LA possédant une alimentation (non représentée) et une pluralité de modules laser excimère individualisés en LA1 à LA3. Les modules laser, de forte puissance, sont positionnées et interconnectés de façon à produire un seul faisceau laser de très forte puissance, par exemple 45 J.

Sur la figure 1, les trois têtes laser sont montées en série.

La source laser LA1 constitue un oscillateur laser. De façon classique, cet oscillateur laser comporte:
- un matériau ou milieu laser actif capable d'amplifier une onde incidente;
- des moyens de pompage optique (non représentés) qui apportent au milieu de l'énergie propre à peupler l'un au moins de ses niveaux d'excitation, afin de réaliser une inversion de population dans le milieu actif; et
- un résonateur optique, composé de deux miroirs disposés face à face, qui accumule l'émission induite concentrée sur quelques modes du résonateur.

Dans le cas d'un oscillateur laser, l'un des miroirs est à réflexion maximale. Ce miroir est désigné par la référence RM. Diamétralement opposé à celui-ci, le miroir RT est semi-réfléchissant.

Le miroir RM peut être un simple miroir à réflexion maximale. En variante (figures 1 et 2), il peut être réalisé sous la forme d'un coin de cube, d'un dièdre trirectangle ou d'un dièdre dont la fonction, en outre de la réflexion maximale, est de symétriser la répartition énergétique et spatiale du faisceau laser par rapport à l'axe optique dudit coin de cube ou analogue. Ce faisceau laser ainsi rendu symétrique peut constituer un avantage significatif dans la répartition spatiale et énergétique du faisceau laser résultant que l'on décrira plus en détail ci-après.

Après cet oscillateur LA1, on trouve deux modules amplificateurs laser LA2 et LA3 montés en série. Ces modules amplificateurs sont dépourvus de miroirs RM et RT. Ces modules assurent l'amplification en puissance du faisceau qu'ils reçoivent.

La réflexion du miroir RM de l'oscillateur est maximal à la longueur d'onde du laser excimère, ici 308 nm. Le miroir de sortie RT de l'oscillateur LA1 a un coefficient de réflexion de l'ordre de 4 à 40%.

Les dimensions des modules laser LA1 à LA3 sont approximativement les suivantes.

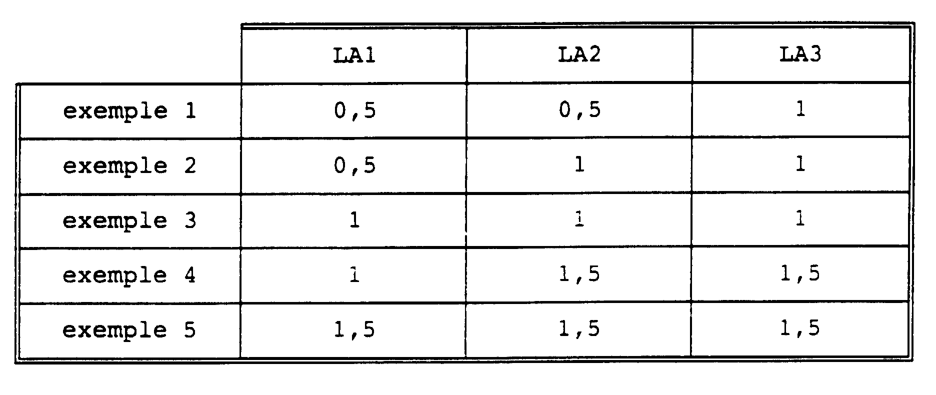

Les distances entre modules tiennent compte des longueurs de cavités, et des durées des impulsions laser pour éviter :
a) tous dommages aux miroirs, aux hublots,
b) une auto-absorption du faisceau laser.

L'inconvénient d'une telle source est son encombrement. En effet, une telle mise en série des différents modules nécessite une installation de grande taille.

Une solution (figure 2) consiste à utiliser des miroirs de renvoi et des lentilles de focalisation pour réduire l'encombrement d'une telle source laser.

On retrouve ici les modules LA1, LA2 et LA3 décrits précédemment.

La figure 2 se distingue de la figure 1 par le fait d'utiliser des miroirs de renvoi M1, M2, M3 et M4 pour acheminer le faisceau laser résultant sur la cible CIB.

Des lentilles de focalisation L1 et L2 sont en outre disposées pour focaliser l'onde entre la source LA1 et LA2 pour la lentille L1, et entre la source LA2 et la source LA3 pour la lentille L2.

Selon l'invention, des mécanismes de réglage REG1 entre la source LA1 et LA2, ainsi qu'entre la source LA2 et LA3 sont prévus pour ajuster la distance entre ces deux modules en fonction du profil temporel laser souhaité que l'on décrira plus en détail ci-après.

Selon l'invention, le choix des longueurs des différents modules ainsi que des distances entre les différents modules montés en série permet d'ajuster l'énergie délivrée par le faisceau laser résultant FLAR destiné à être appliqué sur l'échantillon à traiter au niveau du plan CIB.

Par exemple, les mécanismes de réglage REG1 et REG2 sont des moyens propres à déplacer les éléments optiques M1, L1, M2 et M3, L2, M4 selon l'axe optique du faisceau laser. Ils permettent par translation parallèle aux axes des faisceaux incidents et émergents de faire varier la longueur du trajet optique entre LA1 et LA2 pour REG1, entre LA2 et LA3 pour REG2.

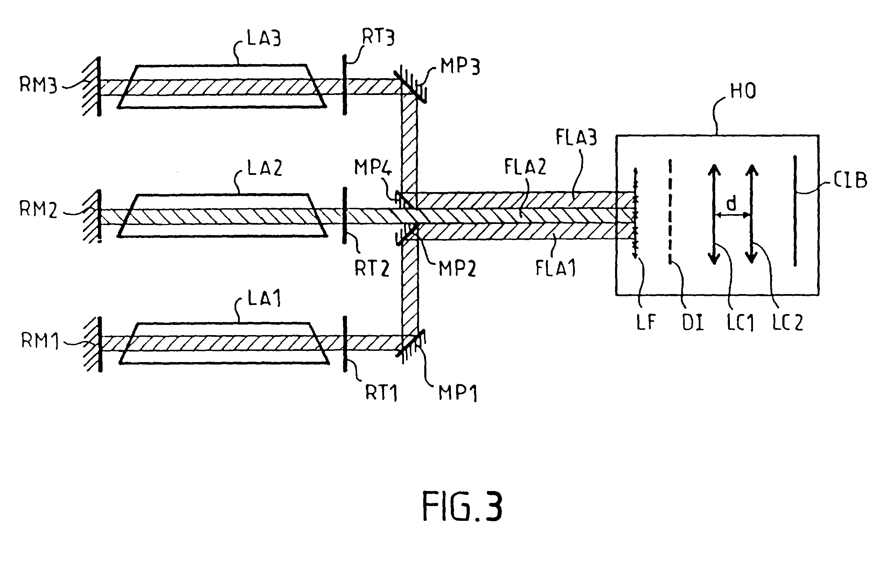

En variante, en référence à la figure 3, les modules laser peuvent être mis en parallèle. Ainsi, on retrouve les trois modules laser LA1 à LA3 décrits précédemment. Ceux-ci jouent tous, ici, le rôle d'oscillateur avec chacun un miroir réflecteur maximal RM et un miroir réflecteur partiel RT. Des moyens de couplage constitués par des miroirs de renvoi MP1, MP2, MP3 et MP4 permettent de coupler les faisceaux impulsionnels laser FLA1, FLA2 et FL3 issus de chaque oscillateur vers le plan-cible CIB.

Avantageusement, un homogénéiseur HO est prévu pour homogénéiser les faisceaux laser issus de chaque module.

De préférence, l'homogénéiseur est celui décrit dans la Demande déposée par la Demanderesse pour "Dispositif optique pour homogénéiser un faisceau laser", le même jour que la présente Demande de Brevet.

D'une façon générale, le dispositif homogénéiseur HO comprend :
- une pluralité de m.n lentilles frontales LF convergentes, jointives, disposées en m lignes et n colonnes, perpendiculairement à la direction de propagation des faisceaux laser issus de chaque module laser, et propres à découper les faisceaux laser à traiter en m.n faisceaux laser ayant chacun une section transversale sensiblement uniforme, et une répartition énergétique sensiblement homogène, et
- au moins une lentille de collection LC, convergente, disposée perpendiculairement à la direction de propagation des faisceaux laser à traiter, en aval des lentilles frontales LF selon le sens du cheminement du faisceau laser, ladite lentille de collection étant propre à focaliser dans un plan choisi CIB les faisceaux issus des lentilles frontales.

De préférence, le dispositif homogénéiseur HO comprend deux lentilles de collection LC1 et LC2 mobiles en translation selon l'axe optique, la distance d entre les deux lentilles étant choisie pour adapter selon l'invention la taille et l'énergie du faisceau laser résultant FLAR à l'application choisie.

Avantageusement, la combinaison des lentilles de collection LC1 et LC2 est calculée pour minimiser les aberrations optiques éventuelles de la source laser couplée avec les moyens homogénéiseurs et pour améliorer les caractéristiques énergétiques par unité de surface (constance de la fluence du faisceau laser résultant).

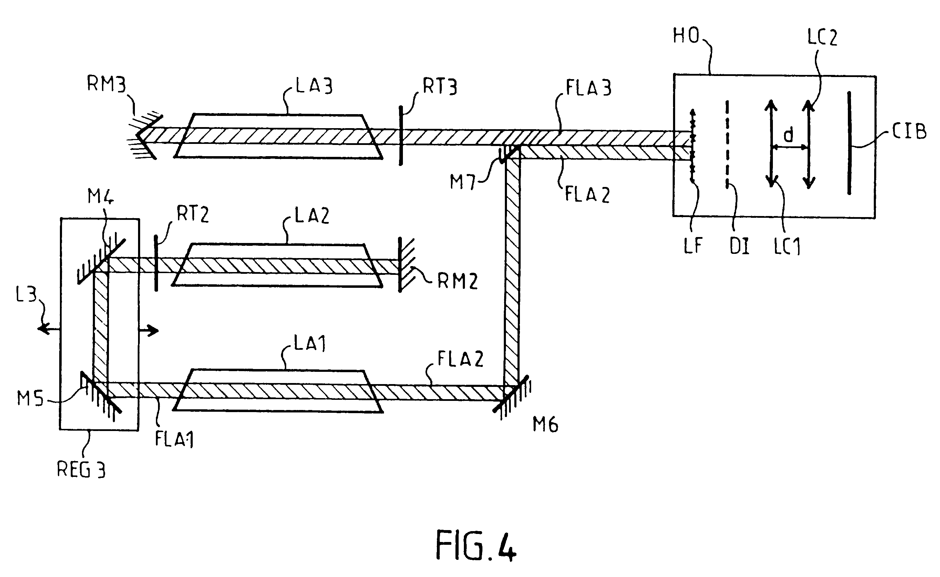

Sur la figure 4, une variante de la source laser est représentée. On retrouve les modules laser LA1, LA2 et LA3 précédemment décrits.

Par rapport à la figure 3, le module LA1 joue, ici, le rôle d'amplificateur au lieu de jouer le rôle d'oscillateur comme décrit en référence à la figure 3. Les modules LA2 et LA1 sont ici mis en série pour délivrer un faisceau laser impulsionnel résultant FLA2 destiné à être acheminé vers le plan-cible CIB.

L'homogénéiseur HO est prévu pour homogénéiser les faisceaux laser issus du module LA3 délivrant le faisceau laser FLA3 ainsi que le faisceau laser FLA2 issus des modules LA2 et LA1 mis en série.

Un mécanisme de réglage REG3 est prévu entre le module LA2 et le module LA1 pour ajuster la distance entre les deux modules. Des miroirs de renvoi M4, M5, M6 et M7 acheminent le faisceau laser FLA2 issu du module LA2 vers le module LA1 puis le faisceau laser FLA1 vers la cible CIB.

Une lentille de focalisation L3 est avantageusement associée au mécanisme de réglage REG3 pour focaliser le faisceau laser en fonction du déplacement des éléments optiques.

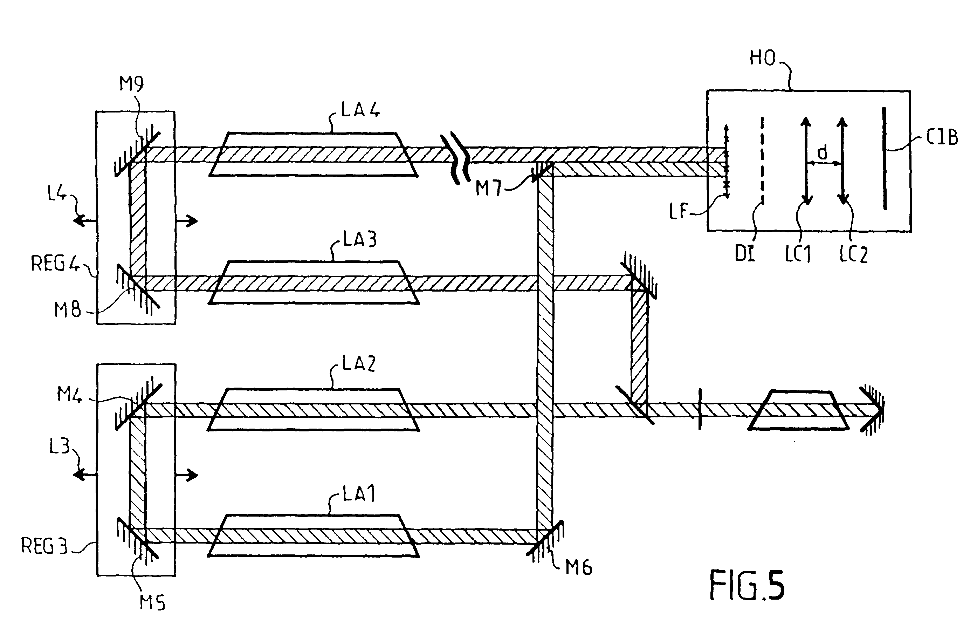

Sur la figure 5, on a représenté une source laser à quatre modules laser. Une telle installation est symétrique. Elle se distingue de celle décrite en référence à la figure 4 par le fait de comprendre un module laser amplificateur supplémentaire LA4 mis en série avec le module laser oscillateur LA3 de la figure 4.

Dans l'application recuit de silicium amorphe pour la fabrication d'écrans à cristaux liquides de grande taille, chaque panneau présente des dimensions de l'ordre de 550 x 650 mm. Le faisceau laser résultant a une dimension adaptée à la taille des panneaux à traiter.

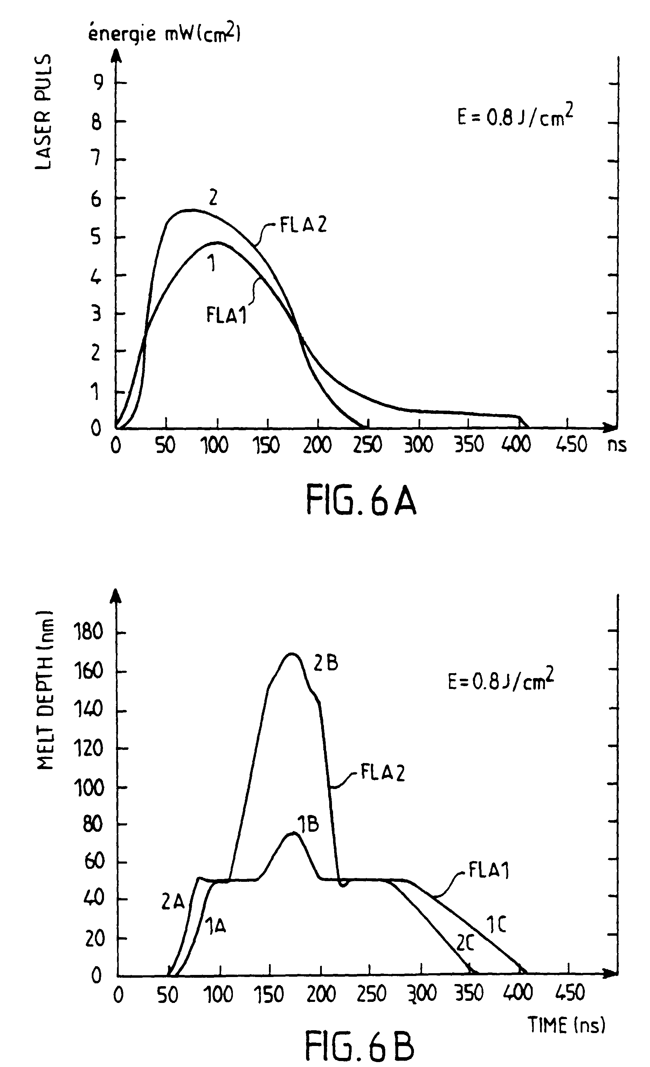

Sur la figure 6A, on a représenté deux profils temporels de l'énergie délivrée par deux faisceaux laser, issus chacun d'un module laser. L'énergie totale de chaque faisceau est de 0,8 J/cm². L'énergie en mW/cm² est représentée sur l'axe des ordonnées tandis que le temps en ns est représenté sur l'axe des abscisses. Il s'agit de deux profils relatifs à deux faisceaux laser différents. On distingue par exemple que le faisceau laser FLA2 délivre une énergie forte plus rapidement que le faisceau laser FLA1.

Sur la figure 6B, on a représenté l'épaisseur de la couche fondue en fonction du temps par les deux faisceaux laser FLA1 et FLA2 décrits en référence à la figure 6A.

On constate que le faisceau laser FLA2 comprend un front de montée en puissance 2A plus raide que celui 1A du faisceau laser FLA1.

On observe aussi que le faisceau laser FLA1 comprend un palier en puissance 1B sensiblement plus plat, à une profondeur de 50 nm, que celui 2B du faisceau laser FLA2. Par exemple, la profondeur de 50 nm correspond à l'épaisseur de la couche de silicium amorphe à recuire par laser.

On constate enfin que le faisceau laser FLA1 comprend un front de descente en puissance 1C sensiblement plus doux que celui 2C du faisceau laser FLA2.

Dans l'application recuit de silicium amorphe par laser excimère, le profil temporel du faisceau laser résultant souhaité comprend un front de montée en puissance sensiblement raide pour améliorer l'efficacité du chauffage, un palier en puissance sensiblement plat à une profondeur de traitement choisie pour obtenir une fusion totale de la couche de silicium amorphe à ladite profondeur tout en évitant la fusion du substrat, et un front de descente en puissance sensiblement doux pour favoriser la croissance des cristaux.

Selon l'invention, on ajuste les faisceaux laser issus de chaque module laser pour obtenir un faisceau laser résultant présentant un tel profil temporel.

Par exemple, les moyens d'ajustement comprennent des moyens de déclenchement propres à déclencher les modules oscillateurs laser avec un décalage temporel choisi.

Une autre solution selon l'invention consiste à régler les longueurs des modules ainsi que les distances entre les différents modules afin d'obtenir un faisceau laser résultant présentant le profil temporel adapté au traitement de surface. Par exemple, un profil tel que décrit précédemment.

Une autre solution selon l'invention consiste à faire varier l'énergie utilisée par chaque module laser individuel pour que le faisceau laser résultant représente le profil choisi. Les moyens de variation peuvent être des moyens optiques (diaphragmes) et/ou mécaniques.

Une autre solution selon l'invention consiste à régler la distance d entre les deux lentilles de focalisation de l'homogénéiseur décrit ci-avant.

## Revendications

1. Dispositif de commande d'une source laser, comprenant au moins deux modules laser (LA1, LA2) ainsi que des moyens de couplage propres à coupler les faisceaux laser issus de chaque module pour délivrer un faisceau laser résultant destiné au traitement d'une surface,
ledit dispositif étant caractérisé en ce qu'il comprend en outre, en combinaison avec le traitement de surface par laser:
- des moyens d'ajustement (REG) propres à ajuster les caractéristiques des faisceaux laser issus de chaque module pour obtenir un faisceau laser résultant avec un profil temporel de puissance énergétique adapté de façon optimale audit traitement de surface laser, et
- des moyens homogénéiseurs (HO) propres à homogénéiser spatialement la répartition énergétique dudit faisceau laser résultant, ce qui permet d'adapter, en combinaison, la répartition spatiale et énergétique dudit faisceau laser résultant au traitement de surface choisi.

2. Dispositif selon la revendication 1, caractérisé en ce que les moyens d'ajustement sont propres à obtenir un profil temporel de la puissance énergétique du faisceau laser résultant avec un front de montée en puissance sensiblement raide, un palier en puissance sensiblement plat à une profondeur de traitement choisie et un front de descente en puissance sensiblement doux.

3. Dispositif selon la revendication 1 ou la revendication 2, caractérisé en ce que les moyens d'ajustement comprennent des moyens propres à faire varier optiquement et/ou mécaniquement l'énergie délivrée par chaque module laser.

4. Dispositif selon la revendication 1 ou la revendication 2, caractérisé en ce que les moyens d'ajustement comprennent des moyens de réglage propres à régler les caractéristiques optiques et/ou géométriques des faisceaux laser issus de chaque module laser.

5. Dispositif selon la revendication 1, caractérisé en ce que la source laser comprend au moins un module amplificateur laser et un module oscillateur montés en série.

6. Dispositif selon la revendication 5, caractérisé en ce que le module oscillateur laser comprend un miroir à réflexion totale (RM) agencé en coin de cube ou analogue pour symétriser le faisceau laser par rapport à l'axe optique dudit faisceau laser, et contribuer à l'homogénéisation du faisceau laser résultant.

7. Dispositif selon la revendication 5, caractérisé en ce que les moyens d'ajustement comprennent des moyens de réglage (REG) propres à régler la longueur des modules laser ainsi que la distance entre les modules amplificateur et oscillateur en fonction de l'application choisie et de l'énergie laser à appliquer.

8. Dispositif selon la revendication 5, caractérisé en ce que les moyens d'ajustement comprennent des moyens de déclenchement propres à déclencher les deux modules oscillateurs laser avec un décalage temporel choisi.

9. Dispositif selon la revendication 1, caractérisé en ce la source laser comprend au moins deux modules oscillateurs laser montés en parallèle.

10. Dispositif selon la revendication 9, caractérisé en ce les moyens d'ajustement comprennent des moyens de déclenchement propres à déclencher les deux modules oscillateurs laser avec un décalage temporel choisi.

11. Dispositif selon la revendication 1, caractérisé en ce que le dispositif optique homogénéiseur de faisceau laser (HO) comprend :
- une pluralité de m.n lentilles frontales (LF) convergentes, jointives, disposées en m lignes et n colonnes, perpendiculairement à la direction de propagation des faisceaux laser issus de chaque module laser, et propres à découper les faisceaux laser à traiter en p.q faisceaux laser ayant chacun une section transversale sensiblement uniforme, et une répartition énergétique sensiblement homogène, p.q étant un sous-multiple de m.n,
- au moins une lentille de collection (LC), convergente, disposée perpendiculairement à la direction de propagation des faisceaux laser à traiter, en aval des lentilles frontales selon le sens du cheminement du faisceau laser, ladite lentille de collection étant propre à focaliser dans un plan choisi (CIB) les faisceaux issus des lentilles frontales.

12. Dispositif selon la revendication 11, caractérisé en ce qu'il comprend deux lentilles de collection (LC1 et LC2) mobiles en translation selon l'axe optique, la distance (d) entre les deux lentilles étant choisie pour adapter la taille et l'énergie du faisceau laser résultant à l'application choisie et la combinaison desdites lentilles de collection (LC1 et LC2) étant susceptible d'être calculée pour minimiser les aberrations optiques de la source laser couplée avec les moyens homogénéiseurs et pour améliorer les caractéristiques énergétiques par unité de surface du faisceau laser résultant.

13. Dispositif selon l'une des revendications 1 à 12, caractérisé en ce que le traitement de surface est un recuit d'un matériau semi-conducteur du type silicium amorphe.

## Patentansprüche

1. Vorrichtung zur Steuerung einer Laserquelle, bestehend aus mindestens zwei Lasermodulen (LA1, LA2) sowie aus Kopplungsmitteln, die dafür ausgelegt sind, die aus jedem Modul austretenden Laserstrahlen zu koppeln, um einen resultierenden Laserstrahl zu liefern, der für die Behandlung einer Oberfläche ausgelegt ist,
dadurch gekennzeichnet, daß
die Vorrichtung des weiteren in Kombination mit der Laser-Oberflächenbehandlung folgendes umfaßt:
- Einstellmittel (REG), die dafür ausgelegt sind, die Merkmale der aus jedem Modul austretenden Laserstrahlen einzustellen, um einen resultierenden Laserstrahl mit einem optimal an diese Laser-Oberflächenbehandlung angepaßten zeitlichen Profil der energetischen Leistung zu erhalten, und
- Homogenisierungsmittel (HO), die dafür ausgelegt sind, die energetische Verteilung des resultierenden Laserstrahls räumlich zu homogenisieren, was in Kombination die Anpassung der räumlichen energetischen Verteilung des resultierenden Laserstrahls an die gewählte Oberflächenbehandlung ermöglicht.

2. Vorrichtung nach Anspruch 1,
dadurch gekennzeichnet, daß
die Einstellmittel dafür ausgelegt sind, ein zeitliches Profil der energetischen Leistung des resultierenden Laserstrahls mit einer im wesentlichen steilen Leistungsanstiegsfront, einem im wesentlichen flachen Leistungsplateau bei einer gewählten Behandlungstiefe und einer im wesentlichen sanften Leistungsabstiegsfront zu erhalten.

3. Vorrichtung nach Anspruch 1 oder Anspruch 2,
dadurch gekennzeichnet, daß die Einstellmittel Mittel aufweisen, die dafür ausgelegt sind, die von jedem Lasermodul gelieferte Energie optisch und/oder mechanisch zu variieren.

4. Vorrichtung nach Anspruch 1 oder Anspruch 2,
dadurch gekennzeichnet, daß die Einstellmittel Regelungsmittel aufweisen, die dafür ausgelegt sind, die optischen und/oder geometrischen Merkmale der aus jedem Lasermodul austretenden Laserstrahlen zu regeln.

5. Vorrichtung nach Anspruch 1,
dadurch gekennzeichnet, daß
die Laserquelle mindestens ein Laserverstarkermodul und ein Oszillatormodul aufweist, die in Reihe geschaltet sind.

6. Vorrichtung nach Anspruch 5,
dadurch gekennzeichnet, daß
das Laseroszillatormodul einen totalreflektierenden Spiegel (RM) aufweist, der als Würfelkeil o.dgl. ausgebildet ist, um den Laserstrahl bezüglich seiner optischen Achse zu symmetrisieren und zur Homogenisierung des resultierenden Laserstrahls beizutragen.

7. Vorrichtung nach Anspruch 5,
dadurch gekennzeichnet, daß
die Einstellmittel Regelungsmittel (REG) aufweisen, die dafür ausgelegt sind, die Länge der Lasermodule sowie den Abstand zwischen dem Verstärkermodul und dem Oszillatormodul in Abhängigkeit von der gewählten Anwendung und der anzuwendenden Laserenergie zu regeln.

8. Vorrichtung nach Anspruch 5,
dadurch gekennzeichnet, daß
die Einstellmittel Auskopplungsmittel aufweisen, die dafür ausgelegt sind, die beiden Laseroszillatormodule mit einer gewählten zeitlichen Versetzung auszukoppeln.

9. Vorrichtung nach Anspruch 1,
dadurch gekennzeichnet, daß
die Laserquelle mindestens zwei parallelgeschaltete Laseroszillatormodule aufweist.

10. Vorrichtung nach Anspruch 9,
dadurch gekennzeichnet, daß
die Einstellmittel Auskopplungsmittel aufweisen, die dafür ausgelegt sind, die beiden Laseroszillatormodule mit einer gewählten zeitlichen Versetzung auszukoppeln.

11. Vorrichtung nach Anspruch 1,
dadurch gekennzeichnet, daß
die optische Vorrichtung (HO) zur Laserstrahlhomogenisierung folgendes umfaßt:
- eine Vielzahl von m.n konvergierenden, aneinanderstoßenden Frontlinsen (LF), die in m Zeilen und n Spalten senkrecht zur Fortpflanzungsrichtung der aus jedem Lasermodul austretenden Laserstrahlen angeordnet sind und die dafür ausgelegt sind, die zu behandelnden Laserstrahlen in p.q Laserstrahlen zu zerschneiden, die jeweils einen im wesentlichen gleichförmigen Querschnitt und eine im wesentlichen homogene energetische Verteilung besitzen, wobei m.n ein ganzzahliges Vielfaches von p.q ist,
- mindestens eine konvergierende Sammellinse (LC), die senkrecht zur Fortpflanzungsrichtung der zu behandelnden Laserstrahlen in Wegrichtung des Laserstrahls stromabwärts bezüglich der Frontlinsen angeordnet ist und dafür ausgelegt ist, die aus den Frontlinsen austretenden Strahlen in einer gewählten Ebene (CIB) zu fokussieren.

12. Vorrichtung nach Anspruch 11,
dadurch gekennzeichnet, daß
sie zwei in der optischen Achse translationsbewegliche Sammellinsen (LC1 und LC2) aufweist, wobei der Abstand (d) zwischen den beiden Linsen gewählt ist, um die Form und die Energie des resultierenden Laserstrahls an die gewählte Anwendung anzupassen, und die Kombination dieser Sammellinsen (LC1 und LC2) berechnet werden kann, um die optischen Aberrationen der mit den Homogenisierungsmitteln gekoppelten Laserquelle zu minimieren und um die energetischen Merkmale des resultierenden Laserstrahls pro Flächeneinheit zu verbessern.

13. Vorrichtung nach einem der Ansprüche 1 bis 12,
dadurch gekennzeichnet, daß
die Oberflächenbehandlung ein Glühen eines halbleitenden Werkstoffs vom Typ amorphes Silicium ist.

## Claims

1. A device for controlling a laser source, comprising at least two laser units (LAI, LA2) and coupling means able to couple the laser beams coming from each unit in order to deliver a resulting laser beam intended for the treatment of a surface,
characterised in that the said device also comprises, in combination with the laser surface treatment:
- adjustment means (REG) able to adjust the characteristics of the laser beams coming from each unit in order to obtain a resulting laser beam with a time profile of energy optimally adapted to the said laser surface treatment, and
- homogenising means (HO) able to spatially homogenise the energy distribution of the said resulting laser beam, which makes it possible to adapt, in combination, the spatial and energy distribution of the said resulting laser beam to the chosen surface treatment.

2. A device as claimed in claim 1, wherein the regulation means are able to obtain a time profile of the energy of the resulting laser beam with a substantially steep power rise edge, a substantially flat power peak at a chosen treatment depth and a substantially gentle power fall edge.

3. A device as claimed in claim 1 or claim 2, wherein the adjustment means comprise means able to optically and/or mechanically vary the energy delivered by each laser unit.

4. A device as claimed in claim 1 or claim 2, wherein the adjustment means comprise regulation means able to regulate the optical and/or geometric characteristics of the laser beams coming from each laser unit.

5. A device as claimed in claim 1, wherein the laser source comprises at least one laser amplifying unit and an oscillating unit mounted in series.

6. A device as claimed in claim 5, wherein the laser oscillating unit comprises a total reflection mirror (RM) arranged as a corner of a cube or similar in order to make the laser beam symmetrical with respect to the optical axis of the said laser beam, and contribute to the homogenisation of the resulting laser beam.

7. A device as claimed in claim 5, wherein the adjustment means comprise regulation means (REG) able to regulate the length of the laser units as well as the distance between the amplifying and oscillating units as claimed in the chosen application and the laser energy to be applied.

8. A device as claimed in claim 5, wherein the adjustment means comprise triggering means able to trigger the two laser oscillating units with a chosen time shift.

9. A device as claimed in claim 1, wherein the laser source comprises at least two laser oscillating units mounted in parallel.

10. A device as claimed in claim 9, wherein the adjustment means comprise triggering means able to trigger the two laser oscillating units with a chosen time shift.

11. A device as claimed in claim 1, wherein the laser beam homogenising optical device (HO) comprises:
- a plurality of m.n front lenses (LF) which are convergent and contiguous, disposed in m rows and n columns, perpendicularly to the direction of propagation of the laser beams coming from each laser unit, and able to divide the laser beams to be processed into p.q laser beams each having a substantially uniform transverse section, and a substantially homogenous energy distribution, p.q being a sub-multiple of m.n.
- at least one convergent collection lens (LC), disposed perpendicularly to the direction of propagation of the laser beams to be processed, downstream of the front lenses in the direction of travel of the laser beam, the said collection lens being suitable for focusing, in a chosen plane (CIB), the beams coming from the front lenses.

12. A device as claimed in claim 11, wherein it comprises two collection lenses (LC1 and LC2) able to move in translation along the optical axis, the distance (d) between the two lenses being chosen so as to adapt the size and energy of the resulting laser beam to the chosen application and the combination of the said collection lenses (LC1 and LC2) being able to be calculated so as to minimize any optical abberations of the laser source coupled with the homogenising means and to improve the energy characteristics per unit surface of the resulting laser beam.

13. A device as claimed in one of claims 1 to 12, wherein the surface treatment is an annealing of a semiconductor material of the amorphous silicon type.
